# FASCICULE DE BREVET EUROPEEN

(11) **EP 0 980 773 B1**
(45) Date de publication et mention de la délivrance du brevet: **27.11.2002**
(21) Numéro de dépôt: 99401858.8
(22) Date de dépôt: 22.07.1999
(51) Int. Cl.: B60G 21/05, B60G 11/60

(54) **Traverse d'un train arrière de véhicule automobile**
Querträger für ein Hinterradaufhängungssystem eines Kraftfahrzeuges
Cross beam of a rear axle assembly of motor vehicles

(30) Priorité: 19.08.1998 FR 9810557
(43) Date de publication de la demande: 23.02.2000
(73) Titulaire: SOLLAC, 92800 Puteaux (FR)
(72) Inventeur: Tremouilles, Gilles, 92100 Boulogne-Billancourt (FR)
(74) Mandataire: Lanceplaine, Jean-Claude

(56) Documents cités:
- FR-A- 2 745 240
- US-A- 4 623 164
- US-A- 4 750 757
- US-A- 4 790 974
- US-A- 4 951 962

## Description

La présente invention a pour objet une traverse d'un train arrière d'un véhicule automobile, notamment d'un train arrière à bras tirés à traverse déformable.

Parmi toutes les solutions techniques concernant les trains arrière de véhicules automobiles, l'essieu semi-rigide est une solution simple et économique car elle remplit pour une même pièce la fonction de guidage des roues du train arrière et la fonction d'anti-roulis.

Généralement, l'essieu semi-rigide est composé de deux bras tirés et reliés entre eux par une traverse.

L'ensemble ainsi formé est lié à la caisse du véhicule par l'intermédiaire de deux paliers élastiques.

La traverse est reliée de manière rigide au bras le plus souvent par l'intermédiaire de deux goussets fixés chacun, d'une part, sur l'extrémité de la traverse et, d'autre part, sur le bras tiré correspondant généralement par soudage.

Selon la configuration du train arrière du véhicule, la position de la traverse est plus ou moins rapprochée des extrémités des bras. Cette position est fonction de l'architecture globale du soubassement du véhicule en particulier en fonction de l'emplacement du réservoir de carburant.

Pour assurer la double fonction de guidage et d'anti-roulis, cette traverse doit présenter une rigidité déterminée notamment en torsion et en flexion pour obtenir un compromis idéal entre la tenue de route du véhicule et le confort des passagers en particulier pour un véhicule de tourisme.

En effet, l'utilisation d'une traverse trop rigide empêche pratiquement tout roulis de la caisse du véhicule, mais provoque des secousses inconfortables pour les passagers associées parfois au décollement des roues, préjudiciable à la tenue de route de ce véhicule.

L'utilisation d'une traverse trop souple empêche tout décollement des roues lors d'une conduite normale du véhicule, mais engendre un phénomène de roulis important également inconfortable pour les passagers.

La plupart des traverses déformables de train arrière à bras tirés ont une section transversale présentant, sur toute leur longueur, un profil dit à section ouverte par exemple ayant la forme générale d'un C, d'un U ou d'un V.

Ce type de traverse présente la particularité d'offrir une rigidité en torsion compatible avec les valeurs recherchées limitant le roulis de la caisse du véhicule, tout en assurant une bonne tenue de route.

Dans un souci de limitation du poids du véhicule, les constructeurs ont été amenés à diminuer l'épaisseur des parois de la traverse dans les limites possibles pour la tenue mécanique de cette traverse, mais cette diminution d'épaisseur des parois d'une traverse à section ouverte entraîne néanmoins une diminution importante de la raideur en torsion de cette traverse augmentant ainsi le roulis de la caisse du véhicule.

Aussi, pour conserver les mêmes caractéristiques au véhicule en particulier en matière de roulis, les constructeurs désireux de limiter le poids des véhicules ont été contraints de doubler la traverse à section ouverte avec un dispositif limitant le roulis, par exemple une barre anti-roulis.

Une autre solution pourrait consister à utiliser une traverse à section fermée sur toute sa longueur dont l'épaisseur des parois est réduite.

Mais, pour présenter la raideur en torsion compatible avec les valeurs recherchées afin d'obtenir le compromis entre la tenue de route du véhicule et le confort des passagers, il serait nécessaire de diminuer fortement la section de la traverse ou de conserver la même section tout en diminuant l'épaisseur des parois ou même de diminuer la section et l'épaisseur des parois de la traverse.

Une telle diminution d'épaisseur est incompatible avec la tenue mécanique de la traverse, même en utilisant des aciers à haute limite élastique.

De la même manière, une diminution de la section de la traverse engendrerait de très fortes contraintes au niveau du raccordement de cette traverse au bras de l'essieu.

A cet effet, on connaît dans le FR-A-2 745 240, qui sert de base pour la présentation en deux parties de la revendication 1, une traverse de train arrière qui comporte une zone centrale dans laquelle la section de cette traverse présente un profil fermé et deux zones latérales dans lesquelles la section transversale de cette traverse présente un profil ouvert.

Mais ce type de traverse présente des inconvénients dont le principal réside dans le fait que les contraintes engendrées au niveau des interfaces entre les zones ouvertes et la zone centrale fermée sont importantes comme on le verra ultérieurement. Ces contraintes peuvent provoquer dans ces zones des fissures et de ce fait des zones de fragilisation incompatibles avec la tenue mécanique de la traverse.

L'invention a pour but d'éviter ces inconvénients en proposant une traverse de train arrière de véhicule automobile dont la raideur en torsion est modulable en fonction des caractéristiques recherchées pour le train arrière et qui permet de diminuer la section et /ou l'épaisseur des parois, donc le poids.

L'invention a donc pour objet une traverse d'un train arrière de véhicule automobile, notamment d'un train arrière à bras tirés à traverse déformable, formée par un profilé métallique comportant une ouverture longitudinale continue s'étendant sur au moins 80% de la longueur dudit profilé, caractérisée en ce que ladite traverse est munie d'un bloc en matériau élastomère formé par une plaque fixée audit profilé, présentant une section transversale en forme de quadrilatère et obturant la partie centrale de ladite ouverture longitudinale.

Selon d'autres caractéristiques de l'invention:
- le profilé comporte plusieurs faces et la face comportant l'ouverture longitudinale est munie de deux bords tombés opposés sur lesquels est en appui ledit bloc en matériau élastomère,
- le bloc comporte des bords latéraux verticaux ou des bords latéraux parallèles et inclinés,
- le bloc est fixé sur le profilé par collage ou par des organes de vissage,
- le matériau élastomère du bloc présente un module d'Young compris entre 200 et 500 MPa.

L'invention sera mieux comprise à la lecture de la description qui va suivre, donnée uniquement à titre d'exemple, pour la compréhension de laquelle on se référera aux dessins annexés, dans lesquels:
- la figure 1 est une vue schématique en perspective d'un train arrière à bras tirés d'un véhicule automobile, muni d'une traverse conforme à l'invention,
- la figure 2 est une vue en perspective et partiellement arrachée d'une traverse conforme à l'invention,
- les figures 3 à 5 sont des vues en perspective montrant plusieurs modes de réalisation d'un bloc en matériau élastomère équipant la traverse conforme à l'invention,
- les figures 6 à 11 sont des courbes montrant les résultats d'essais effectués avec différents modes de réalisation de traverses conformes à l'invention,
- la figure 12 est une vue en perspective d'une traverse selon l'état de la technique.

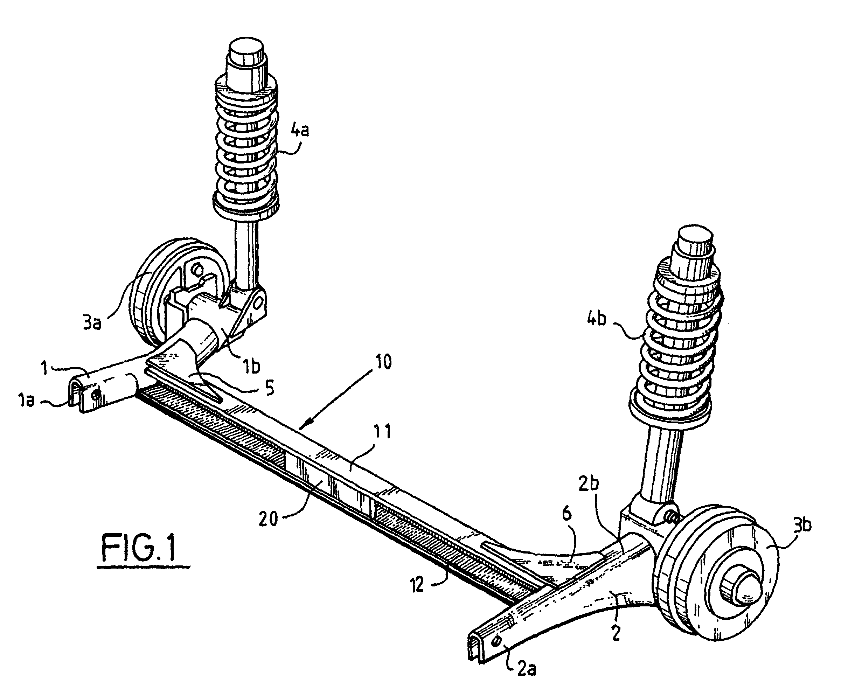

Sur la figure 1,on a représenté un train arrière semi-rigide à bras tirés combinés qui comporte deux bras parallèles appelés bras tirés et désignés respectivement par les références 1 et 2.

Les bras 1 et 2 sont reliés à l'une de leurs extrémités, respectivement 1a et 2a, à la caisse du véhicule par une liaison élastique du type connu et non représentée.

D'autre part, les bras 1 et 2 supportent à leurs extrémités 1b et 2b opposés à celles reliées à la caisse du véhicule, des organes 3a et 3b de support de la roue correspondante.

Chaque extrémité 1b et 2b des bras1 et 2 est également reliée à la caisse du véhicule par l'intermédiaire d'un amortisseur, respectivement 4a et 4b.

Par ailleurs, les bras 1 et 2 sont reliés de manière rigide entre eux par une traverse désignée dans son ensemble par la référence 10.

Dans l'exemple de réalisation représenté à la figure 1, cette traverse 10 est reliée à chaque bras 1 et 2 par l'intermédiaire d'un gousset, respectivement 5 et 6, soudé, d'une part, sur l'extrémité correspondante de la traverse 10 et, d'autre part, sur le bras 1 ou 2 correspondant.

La traverse 10, les deux bras 1 et 2 ainsi que les goussets 5 et 6 forment l'essieu du train arrière représenté à la figure 1.

Selon la configuration du train arrière du véhicule, la position de la traverse 10 est plus ou moins rapprochée des extrémités 1a et 2a des bras 1 et 2. Cette position est fonction de l'architecture globale du soubassement en particulier en fonction de l'emplacement du réservoir de carburant.

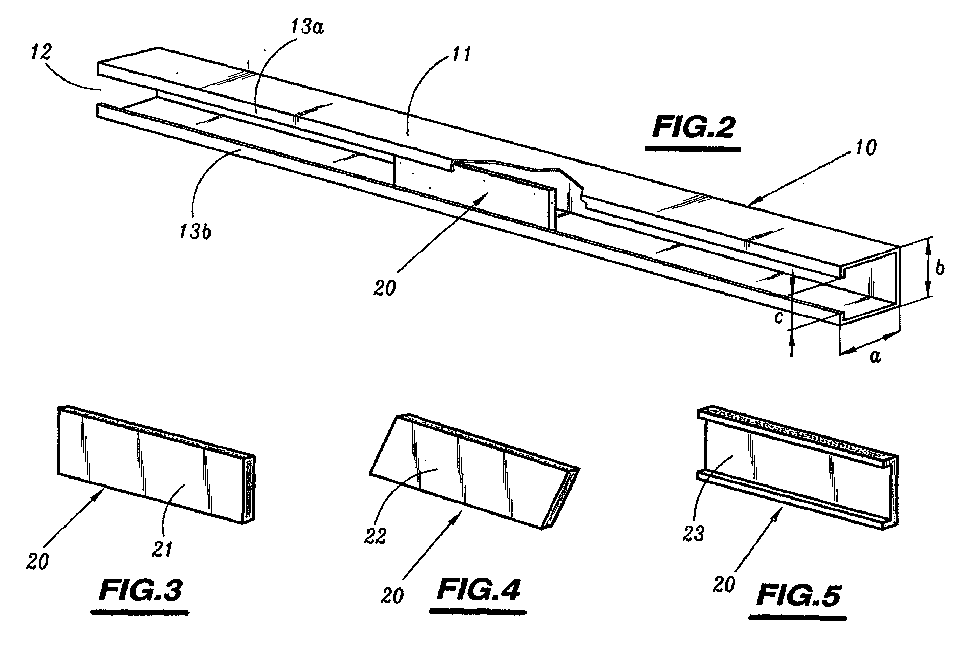

Ainsi que représenté plus particulièrement à la figure 2, la traverse 10 est formée par un profilé métallique 11 comportant une ouverture longitudinale 12 continue et s'étendant sur au moins 80% de la largeur dudit profilé 11.

Dans l'exemple de réalisation représenté sur les figures 1 et 2, l'ouverture longitudinale 12 s'étend sur toute la longueur du profilé 11.

Selon une variante non représentée, les extrémités de la traverse 10 peuvent présenter une section transversale à profil fermé, cette section transversale pouvant être différente de la section transversale du profilé 11. En effet, ces extrémités peuvent être fermées par écrasement d'une portion de ce profilé 11.

De manière préférentielle et ainsi que représenté sur les figures, le profilé 11 comporte plusieurs faces dont une est munie de l'ouverture longitudinale 12 qui comporte deux bords tombés opposés.

Par exemple, le profilé11 a la forme d'un U et l'extrémité de chaque branche libre est munie d'un bord tombé, respectivement 13a et 13b.

Le profilé 11 peut également avoir d'autres formes.

La partie centrale de l'ouverture 12 est fermée par un bloc 20 en matériau élastomère fixé au profilé 11 et en appui sur la face interne de chaque bord tombé 13a et 13b.

Le bloc 20 en matériau élastomère est fixé sur les parties horizontales du profilé 11 par des vis, non représentées qui traversent ce bloc 20 dans sa hauteur, ou par collage sur la face interne desdites parties horizontales ou des bords tombés 13a et 13b.

Selon un premier mode de réalisation représenté à la figure 3, le bloc est formé par une plaque 21 présentant une section transversale en forme de quadrilatère dont les bords latéraux sont verticaux.

Selon un second mode de réalisation représenté à la figure 4, le bloc est formé par une plaque 22 présentant une section transversale en forme de quadrilatère et dont les bords latéraux sont parallèles et inclinés.

Selon un troisième mode de réalisation représenté à la figure 5, le bloc 20 est formé par une plaque 23 qui présente une section transversale en forme de U.

Les bords latéraux de la plaque 23 peuvent être verticaux ou inclinés.

Le mode de fabrication de la traverse 10 est le suivant.

Tout d'abord, on forme le profilé 11à la section désirée comme par exemple un profilé carré, rectangulaire, rond ou trapézoïdal et on fixe le bloc 20 sur la face interne de chaque bord tombél3a et 13b. Ensuite, la traverse 10 est soudée au reste de l'essieu de façon identique aux traverses traditionnelles.

De préférence, le matériau élastomère du bloc 20 présente un module d'Young compris entre 200 et 500 MPa.

En utilisant une traverse selon l'invention dans un train arrière à bras tirés, il est possible de diminuer l'épaisseur des parois de ladite traverse et d'obtenir un gain de masse de l'ordre de 40% sur cette traverse et plus car elle permet de supprimer le système de barre anti-roulis.

L'inertie de torsion de la traverse 10 peut être ajustée de façon très précise en modifiant la largeur et/ou l'épaisseur du bloc 20 en matériau élastomère comme montré dans ce qui suit.

La Demanderesse a procédé à des essais comparatifs permettant de montrer l'influence de l'épaisseur, la largeur, la forme du bloc et des moyens de fixation de ce bloc sur les caractéristiques mécaniques de la traverse, comme par exemple la rigidité de l'essieu et les contraintes dans ladite traverse.

Pour cela, la Demanderesse a utilisé une traverse en forme de U, comme représenté à la figure 2, dont les parois possèdent une épaisseur de 3 mm et ayant les dimensions suivantes.
a : 60 mm
b : 60 mm
c : 30 mm.

Les caractéristiques mécaniques de l'acier de la traverse et de l'élastomère du bloc étaient les suivantes.

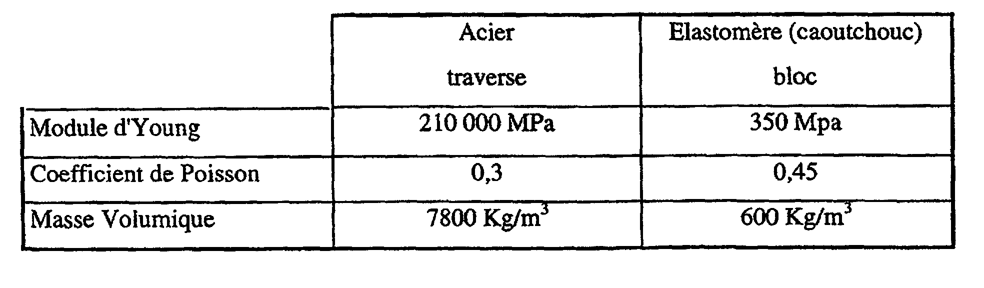

Lors de ces essais, la Demanderesse a procédé à deux types de modélisations, la modélisation coque et la modélisation coque et volume.

Pour la modélisation coque, les deux bras 1 et 2, les deux goussets 5 et 6 et la traverse 10 sont modélisés en coque. Le bloc 20 en matériau élastomère est modélisé en éléments de coque et est relié au profilé 11 par des vis.

Pour la modélisation coque et volume, les deux bras 1 et 2 , les deux goussets 5 et 6 et la traverse 10 sont modélisés en coque. Le bloc 20 en matériau élastomère est modélisé en éléments volumiques.

La Demanderesse présente dans ce qui suit les résultats de ces essais sous forme de tableaux dans lesquels sont indiqués notamment le dérapage de la roue et les contraintes de "MISES".

Le dérapage de la roue est une simulation du dérapage du véhicule avec une accélération de 0,97g dans un virage et par application d'efforts au niveau du contact roue-sol, des liaisons élastiques et des amortisseurs.

Le calcul des contraintes a été effectué de deux manières en utilisant un maillage élargi dont chaque surface élémentaire a donné une valeur de contrainte que l'on appelle contrainte élargie et en utilisant un maillage plus fin et des surfaces élémentaires plus précises que l'on appelle contrainte ponctuelle.

### A- Modélisation coque

### A1 - Bloc rectangulaire à bords verticaux (figure 3).

### a1 - Influence de l'épaisseur du bloc en matériau élastomère.

Lors de cet essai, la Demanderesse a utilisé un bloc en matériau élastomère de largeur de 197,6 mm et fixé sur la traverse 10 au moyen de deux fois 7 vis de diamètre de 8 mm.

Les résultats sont présentés dans le tableau ci-dessous.

| | | Contrainte traverse | | | | |
|---|---|---|---|---|---|---|
| Epaisseur bloc mm | Dérapage roue mm | Ponctuelle maximale MPa | Elargie maximale MPa | Contrainte Interface metal/élastomère MPa | Effort dans les vis MPa | Moment dans les vis MPa |
| 15 | 120,1 | 608 | 406 | 10,6 | 1828 | 25297 |
| 20 | 116,3 | 595 | 394 | 9,8 | 2248 | 26932 |
| 25 | 113,1 | 584 | 384 | 9,3 | 2615 | 27765 |
| 30 | 110,2 | 574 | 374 | 8,8 | 2939 | 28384 |
| 35 | 107,5 | 585 | 365 | 9,3 | 2615 | 27765 |
| 40 | 104,9 | 593 | 357 | 8,8 | 3478 | 28843 |
| 45 | 102,3 | 599 | 351 | 8,0 | 3698 | 28743 |

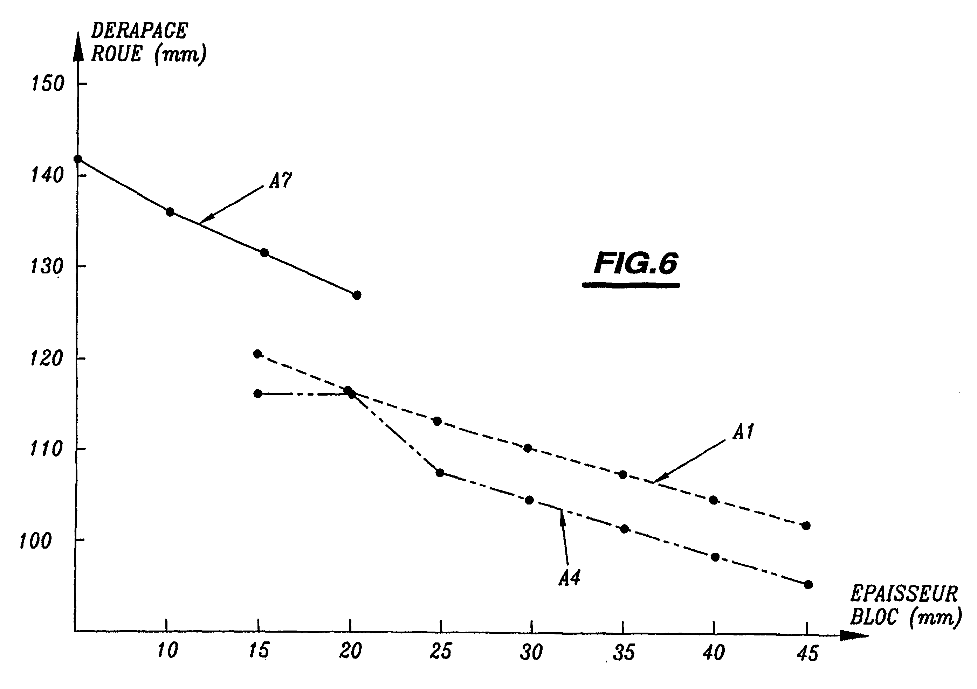

Ces résultats ont été reportés sur les courbes A1, A2 et A3 des figures 6 à 8 qui représentent :
- figure 6: le dérapage de la roue en fonction de l'épaisseur du bloc,

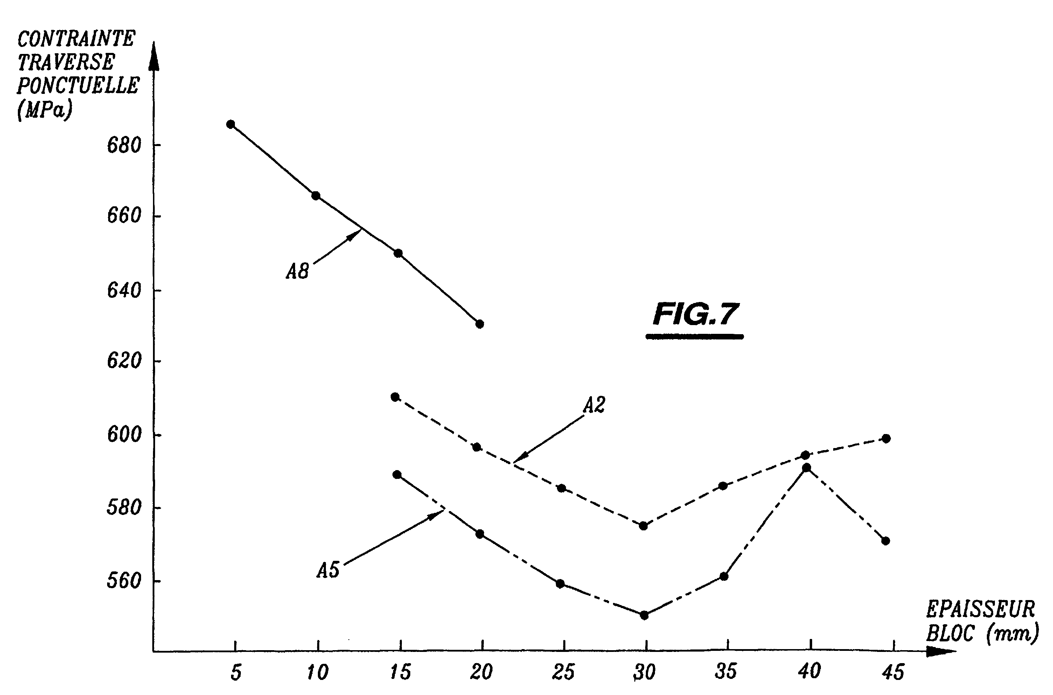

- figure 7: les contraintes ponctuelles dans la traverse en fonction de l'épaisseur du bloc,

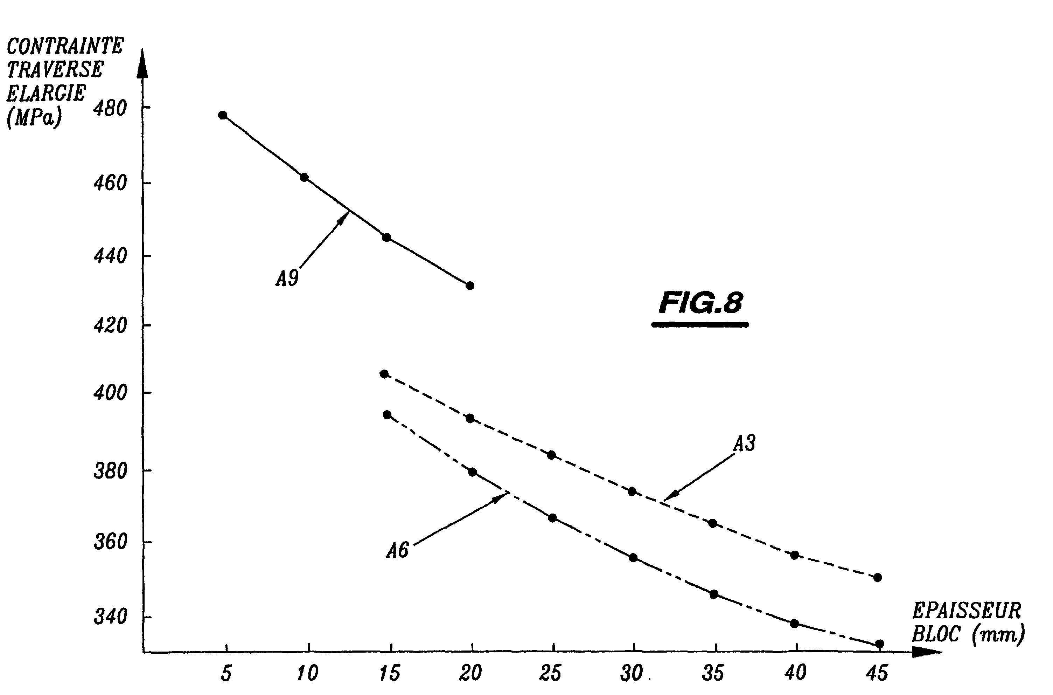

- figure 8: les contraintes élargies dans la traverse en fonction de l'épaisseur du bloc.

Comme le montrent les courbes A1 et A3, la rigidité de l'essieu et la valeur de la contrainte ponctuelle varient linéairement en fonction de l'épaisseur du bloc en matériau élastomère.

Par contre, la valeur de la contrainte élargie passe par un minimum pour une épaisseur de 30 mm du bloc avant de remonter, comme représenté sur la courbe A2 de la figure 7.

Les contraintes maximales engendrées dans la traverse sont localisées au voisinage des vis de fixation du bloc en matériau élastomère.

### b1 - Influence du nombre de vis de fixation du bloc en matériau élastomère.

Ces essais ont été réalisés avec un bloc en élastomère de 30 mm d'épaisseur et de longueur de 197,6 mm. Le nombre de vis était de 14 lors d'un premier essai et de 6 lors d'un second essai.

Les résultats obtenus sont indiqués dans le tableau ci-dessous.

| | | Contrainte traverse | | | | |
|---|---|---|---|---|---|---|
| Nombre de vis | Dérapage roue mm | Ponctuelle maximale MPa | Elargie maximale MPa | Contrainte Interface métal/élastomère MPa | Effort dans les vis MPa | Moment dans les vis MPa |
| 2x7 | 110,2 | 574 | 374 | 8,8 | 2939 | 28384 |
| 2x3 | 125,3 | 668 | 424 | 10,2 | 4250 | 37170 |

Ces résultats permettent de montrer que plus le nombre le vis de fixation du bloc en matériau élastomère sur le profilé de la traverse est élevé, plus la traverse est rigide et les contraintes sont faibles.

### c1 - Influence de la largeur du bloc en matériau élastomère.

Cet essai a été réalisé avec un bloc en matériau élastomère ayant une épaisseur de 30 mm. Le nombre de vis variait en fonction de la dimension du bloc, 14 vis étaient utilisées pour un bloc ayant une longueur de 197,6 mm, 10 vis étaient utilisées pour un bloc de 141,2 mm et 6 vis pour un bloc de 84,71 mm de longueur.

Les résultats figurent sur le tableau ci-dessous.

| | | Contrainte traverse | | | | |
|---|---|---|---|---|---|---|
| Largeur mm | Dérapage roue mm | Ponctuelle maximale MPa | Elargie maximale MPa | Contrainte Interface métal/élastomère MPa | Effort dans les vis MPa | Moment dans les vis MPa |
| 197,6 | 110,2 | 574 | 374 | 8,8 | 2939 | 28384 |
| 141,2 | 118,9 | 604 | 402 | 10,4 | 3045 | 29041 |
| 84,7 | 130,2 | 644 | 439 | 10,6 | 2582 | 27355 |

Cet essai a permis de mettre en évidence que plus la largeur du bloc en matériau élastomère est réduite, plus les contraintes dans le profilé de la traverse augmentent et plus cette traverse est rigide.

### A2 - Bloc à bords inclinés (figure 4).

### a2 - Influence de l'épaisseur du bloc en matériau élastomère.

Cet essai a été effectué en faisant varier l'épaisseur du bloc en matériau élastomère pour une largeur constante de 197,6 mm et avec 14 vis de fixation ayant chacune un diamètre de 8 mm.

Les résultats de cet essai sont indiqués dans le tableau ci-dessous.

| | | Contrainte traverse | | | | |
|---|---|---|---|---|---|---|
| Epaisseur bloc mm | Dérapage roue mm | Ponctuelle maximale MPa | Elargie maximale MPa | Contrainte Interface métal/élastomère MPa | Effort dans les vis MPa | Moment dans les vis MPa |
| 15 | 116 | 588 | 395 | 10,1 | 1918 | 25523 |
| 20 | 116,1 | 572 | 380 | 9,0 | 2197 | 24317 |
| 25 | 107,7 | 558 | 367 | 8,4 | 2420 | 24458 |
| 30 | 104,5 | 550 | 356 | 6,6 | 2606 | 24248 |
| 35 | 101,2 | 561 | 346 | 7,5 | 2758 | 24972 |
| 40 | 98,3 | 591 | 336 | 7,2 | 2885 | 23294 |
| 45 | 95,5 | 571 | 332 | 6,9 | 2988 | 22673 |

Les résultats de cet essai ont été reportées sur les figures 6 à 8 et déterminent respectivement les courbes A4, A5 et A6.

Comme le montrent les courbes A4 et A6, la rigidité de la traverse et la valeur de la contrainte ponctuelle varient linéairement en fonction de l'épaisseur du bloc en matériau élastomère. Par contre, la valeur de la contrainte élargie passe par un minimum pour une épaisseur du bloc égale à 30 mm avant d'augmenter, comme représenté sur la courbe A5 de la figure 7.

Les contraintes maximales engendrées dans la traverse sont localisées au voisinage des vis de fixation du bloc en matériau élastomère.

### b2- Influence du nombre de vis de fixation du bloc en matériau élastomère.

Cet essai a été réalisé avec un bloc en matériau élastomère de 30 mm d'épaisseur et de longueur égale à 197,6 mm. Lors de cet essai, le bloc était fixé successivement sur le profilé de la traverse par 14 vis, 6 vis et 4 vis.

Les résultats de cet essai sont présentés dans le tableau ci-dessous.

| | | Contrainte traverse | | | | |
|---|---|---|---|---|---|---|
| Nombre de vis | Dérapage roue mm | Ponctuelle maximale MPa | Elargie maximale MPa | Contrainte Interface métal/élastomère MPa | Effort dans les vis MPa | Moment dans les vis MPa |
| 2x7 | 104,5 | 550 | 356 | 6,6 | 2606 | 24248 |
| 2x3 | 115,6 | 616 | 394 | 8,7 | 5117 | 30398 |
| 2x2 | 126,0 | 658 | 429 | 10 | 4077 | 31868 |

Cet essai a permis de constater que plus le nombre de vis de fixation est élevé, plus la traverse est rigide et plus les contraintes sont faibles.

### c2: Influence de la largeur du bloc en matériau élastomère.

Cet essai a été effectué avec un bloc en matériau élastomère d'épaisseur de 30 mm. Le nombre de vis de fixation variait en fonction de la dimension du bloc et était de 14 vis pour un bloc ayant une largeur de 197,6 mm, de 10 vis pour un bloc de largeur de 141,2 mm et de 6 vis pour un bloc ayant une largeur de 84,71 mm.

Les résultats de cet essai sont indiqués dans le tableau ci-dessous.

| | | Contrainte traverse | | | | |
|---|---|---|---|---|---|---|
| Largeur mm | Dérapage roue mm | Ponctuelle maximale MPa | Elargie maximale MPa | Contrainte Interface métal/élastomère MPa | Effort dans les vis MPa | Moment dans les vis MPa |
| 197,6 | 104,5 | 550 | 356 | 6,6 | 2606 | 24248 |
| 141,2 | 113,9 | 583 | 388 | 8,8 | 2889 | 27033 |
| 84,7 | 126,6 | 640 | 429 | 9,7 | 2798 | 29884 |

Par cet essai, il a été mis en évidence que plus on diminue la largeur du bloc en matériau élastomère, plus les contraintes engendrées dans la traverse augmentent et plus cette traverse est rigide.

D'une manière générale, les essais indiqués ci-dessus ont mis en évidence que globalement les contraintes et les déplacements c'est-à-dire le dérapage de la roue sont plus faibles pour un bloc possédant des bords latéraux parallèles et inclinés que pour un bloc possédant des bords latéraux droits. L'inclinaison des bords latéraux vers la gauche ou vers la droite n'a aucune influence sur les résultats.

### A3 - Bloc en U (Figure 5)

Cet essai a été effectué en faisant varier l'épaisseur du bloc en matériau élastomère avec une largeur constante de 197,6 mm. Le nombre de vis était de14 possédant chacune un diamètre de 8mm.

Les résultats de cet essai sont indiqués dans le tableau ci-dessous.

| | | Contrainte traverse | | | | |
|---|---|---|---|---|---|---|
| Epaisseur bloc mm | Dérapage roue mm | Ponctuelle maximale MPa | Elargie maximale MPa | Contrainte Interface metal/élastomère MPa | Effort dans les vis MPa | Moment dans les vis MPa |
| 5 | 141,8 | 685 | 478 | 10,1 | 241 | 1213 |
| 10 | 136,6 | 666 | 461 | 9,2 | 609 | 2847 |
| 15 | 131,9 | 650 | 445 | 8,3 | 911 | 4108 |
| 20 | 127,1 | 631 | 431 | 7,7 | 1172 | 7755 |

Les résultats de cet essai ont été reportés sur les figures 6 à 8 respectivement avec la courbe A7 qui représente la variation du dérapage de la roue en fonction de l'épaisseur du bloc, la courbe A8 qui représente la contrainte ponctuelle de la traverse en fonction de l'épaisseur du bloc et la courbe A9 qui représente la contrainte élargie de la traverse en fonction de l'épaisseur du bloc.

Ces courbes A7, A8 et A9 permettent de mettre en évidence que l'augmentation de l'épaisseur du bloc augmente le dérapage de la roue. Contrairement aux blocs précédemment essayés, la valeur de la contrainte ne varie pas linéairement.

### b3- Influence du nombre de vis de fixation du bloc en matériau élastomère.

Cet essai a été effectué avec un bloc en matériau élastomère de 10 mm d'épaisseur et de 197,6 mm de longueur, fixé sur le profilé de la traverse respectivement avec 14 et 6 vis.

Les résultats sont indiqués dans le tableau ci-dessous.

| | | Contrainte traverse | | | | |
|---|---|---|---|---|---|---|
| Nombre de vis | Dérapage roue mm | Ponctuelle maximale MPa | Elargie maximale MPa | Contrainte Interface métal/élastomère MPa | Effort dans les vis MPa | Moment dans les vis MPa |
| 2x7 | 136,6 | 666 | 461 | 9,2 | 609 | 2847 |
| 2x3 | 138,4 | 672 | 466 | 11 | 1191 | 5762 |

Cet essai montre que plus le nombre de vis de fixation est élevé, plus la traverse est rigide.

Cet essai met également en évidence que l'utilisation d'un bloc en U permet de diminuer l'effort et le moment dans les vis par rapport aux blocs utilisés lors des essais précédents.

### c3- Influence de la largeur du bloc en matériau élastomère.

Cet essai a été effectué avec un bloc en matériau élastomère ayant une épaisseur de 10 mm et le nombre de vis de fixation variait en fonction de la dimension de ce bloc et était de 14 vis pour un bloc de 197,6 mm de large, de 10 vis pour un bloc de 141,2 mm de large et 6 vis pour un bloc de 84,7 mm de large.

Les résultats de cet essai sont indiqués dans le tableau ci-dessous.

| | | Contrainte traverse | | | | |
|---|---|---|---|---|---|---|
| Largeur bloc mm | Dérapage roue mm | Ponctuelle maximale MPa | Elargie maximale MPa | Contrainte Interface métal/élastomère MPa | Effort dans les vis MPa | Moment dans les vis MPa |
| 197,6 | 136,6 | 666 | 461 | 9,2 | 609 | 2847 |
| 141,2 | 139,7 | 677 | 471 | 9,2 | 508 | 3293 |
| 84,7 | 142,9 | 688 | 482 | 7,7 | 419 | 2787 |

Cet essai permet de mettre en évidence qu'avec un bloc possédant une section en forme de U, la contrainte ponctuelle et la contrainte élargie augmentent avec un bloc de largeur plus faible tandis que l'effort et le moment dans les vis diminuent avec une diminution de la largeur du bloc en matériau élastomère.

### B- Modélisation coque et volume

Lors des essais mentionnés ci-dessous, la géométrie, les conditions et limites et les caractéristiques mécaniques des matériaux sont identiques à ceux de la version coque seule.

Dans ces essais, le bloc en matériau élastomère a été collé directement sur le profilé de la traverse et les trois géométries du bloc sont reprises.

### B1: Influence de l'épaisseur d'un bloc rectangulaire à bords latéraux verticaux (figure 3).

Cet essai a été effectué avec un bloc ayant une largeur de 197,6 mm et une épaisseur variable.

Les résultats de cet essai sont répertoriés dans le tableau ci-dessous.

| | | Contrainte traverse | | |
|---|---|---|---|---|
| Epaisseur bloc mm | Dérapage roue mm | contrainte Ponctuelle maximale MPa | traverse Elargie maximale MPa | Contrainte interface métal/élastomère MPa |
| 7,5 | 130,9 | 645 | 466 | 10,6 |
| 15 | 123,2 | 617 | 446 | 9,8 |
| 22,5 | 118,9 | 602 | 435 | 9,3 |
| 30 | 116,5 | 594 | 428 | 8,0 |
| 37,5 | 115,4 | 590 | 425 | 7,8 |

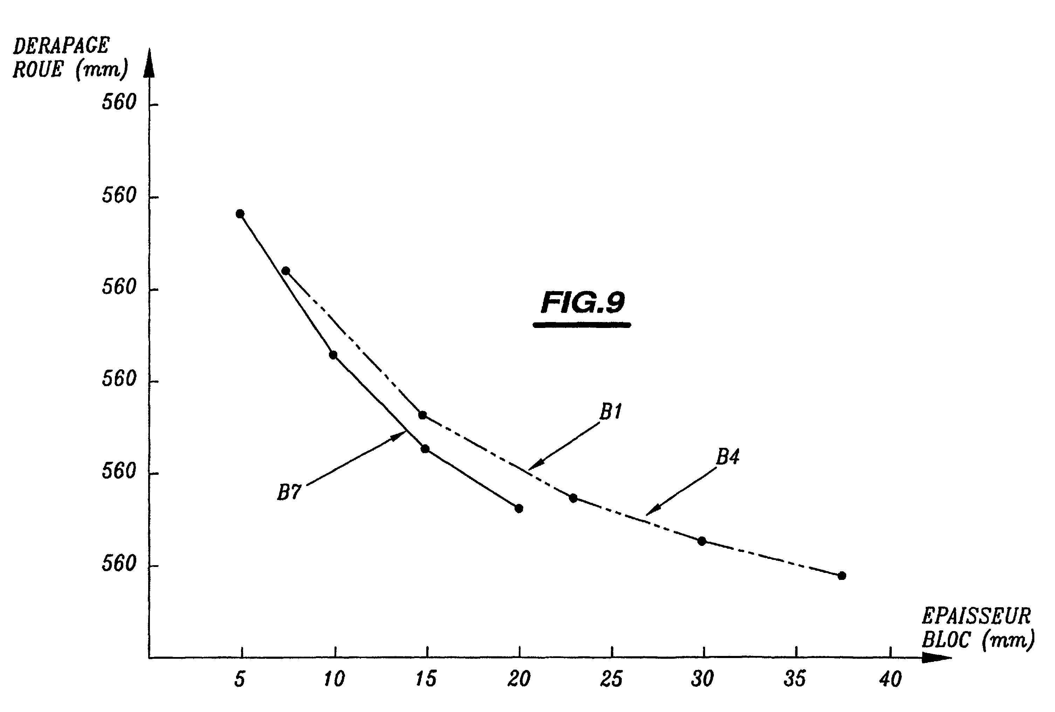

Les résultats de ces essais ont été représentés sur les figures 9, 10 et 11 qui représentent:
- figure 9: dérapage de la roue en fonction de l'épaisseur du bloc - courbe B1,

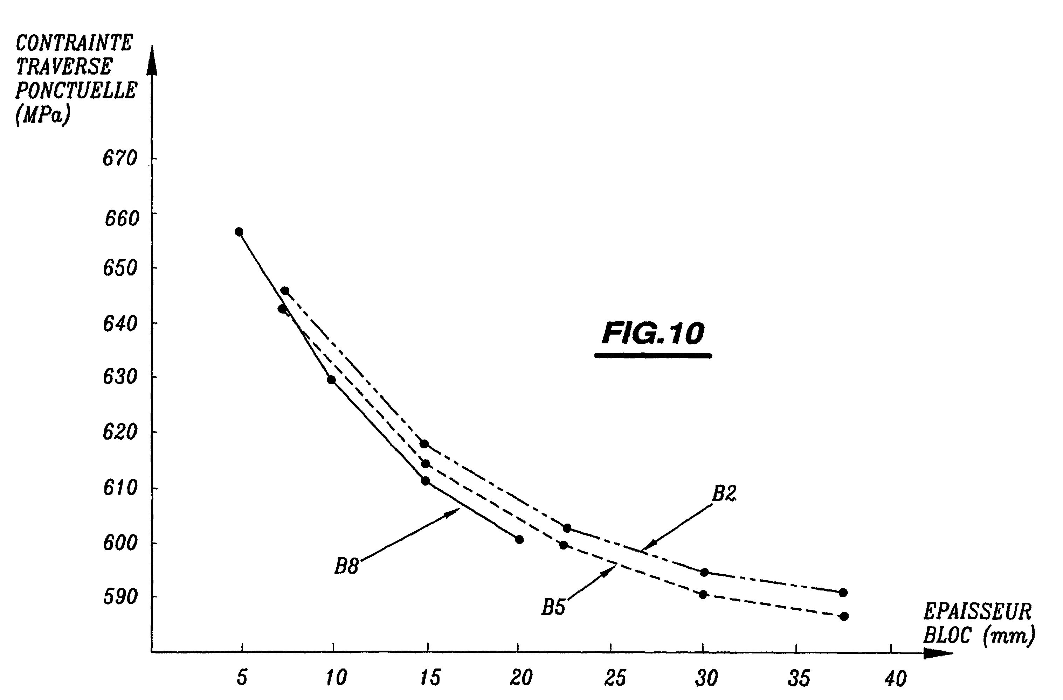

- figure 10: contrainte ponctuelle de la traverse en fonction de l'épaisseur du bloc - courbe B2

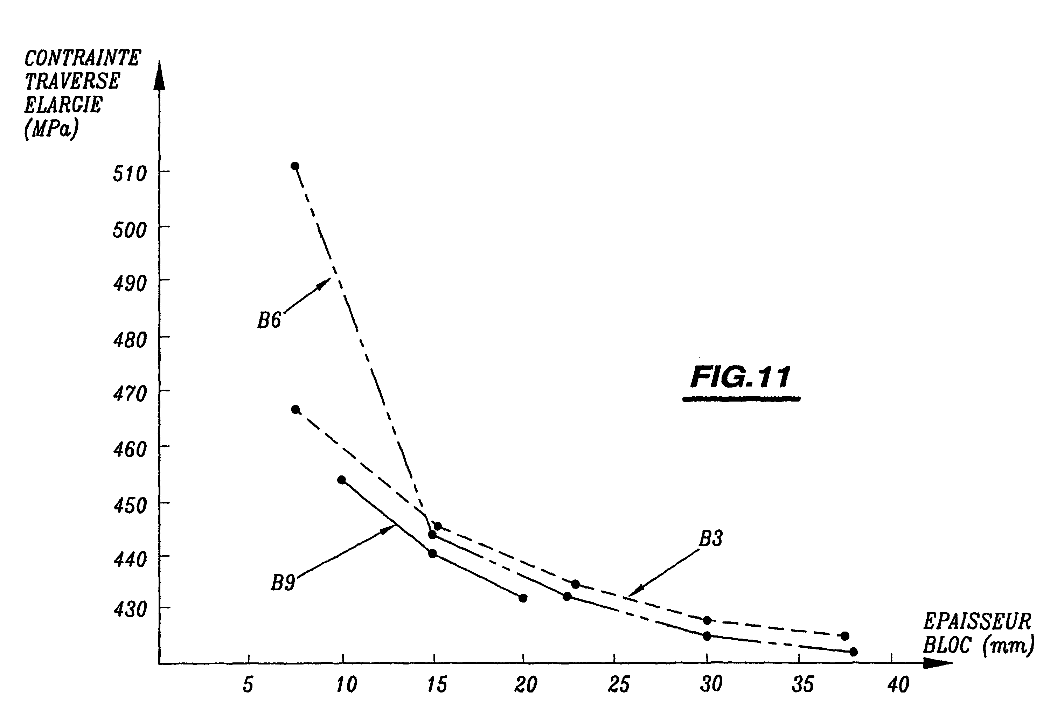

- figure 11: contrainte élargie de la traverse en fonction de l'épaisseur du bloc - courbe B3.

Les courbes B1, B2 et B3 permettent de montrer, d'une part, que le dérapage de la roue diminue lorsque l'épaisseur du bloc augmente et, d'autre part, que les contraintes dans la traverse et au niveau de l'interface métal/élastomère diminuent également lorsque l'épaisseur du bloc en matériau élastomère augmente.

### B2 - Influence de l'épaisseur du bloc à bords inclinés (figure 4).

Cet essai a été effectué en faisant varier l'épaisseur du bloc en matériau élastomère avec une largeur constante de 197,6 mm.

Les résultats de cet essai sont indiqués sur le tableau ci-dessous.

| | | Contrainte traverse | | |
|---|---|---|---|---|
| Epaisseur bloc mm | Dérapage roue mm | Ponctuelle maximale MPa | Elargie maximale MPa | Contrainte interface métal/élastomère MPa |
| 7,5 | 130,9 | 642 | 511 | 10,6 |
| 15 | 123,2 | 614 | 444 | 9,8 |
| 22,5 | 118,9 | 599 | 432 | 9,5 |
| 30 | 116,5 | 590 | 425 | 8,8 |
| 37,5 | 115,4 | 586 | 422 | 8,6 |

Les courbes B4, B5 et B6 montrent respectivement l'évolution du dérapage de la roue et de la contrainte de la traverse en fonction de l'épaisseur, la courbe B4 étant confondue avec la courbe B 1. La différence de comportement entre un bloc possédant des bords latéraux verticaux et un bloc possédant des bords latéraux inclinés et parallèles est très faible comme le montrent ces courbes en comparaison des courbes B 1, B2 et B3.

### B3- Bloc en U (figure 5)

Cet essai a été réalisé avec un bloc ayant une largeur de 197,6 mm et en faisant varier l'épaisseur de ce bloc.

Les résultats de cet essai sont répertoriés dans le tableau ci-dessous.

| | | Contrainte traverse | | |
|---|---|---|---|---|
| Epaisseur bloc mm | Dérapage roue mm | Ponctuelle maximale MPa | Elargie maximale MPa | Contrainte interface métal/élastomère MPa |
| 5 | 134,0 | 656 | 523 | 10,6 |
| 10 | 126,4 | 629 | 454 | 9,8 |
| 15 | 121,4 | 611 | 441 | 9,4 |
| 20 | 118,2 | 600 | 432 | 9,1 |

Les résultats de cet essai sont représentés sur les courbes B7, B8 et B9 respectivement des figures 9, 10 et 11 et permettent de mettre en évidence que la différence de comportement de la traverse entre un bloc de section transversale en forme de quadrilatère et un bloc de section transversale en forme de U est très faible.

Ces essais permettent de montrer que l'utilisation d'un bloc en matériau élastomère pour fermer la partie centrale du profilé de la traverse permet de baisser considérablement les contraintes dans la zone située au niveau de l'interface entre les parties fermées et les parties ouvertes du profilé constituant la traverse.

L'utilisation d'un bloc en matériau élastomère permet d'obtenir une rigidification de la traverse qui augmente avec la vitesse de sollicitation et un effet amortissant pour le retour au point neutre. Cet effet augmente la sécurité passive du véhicule.

L'inertie en torsion de la traverse selon l'invention peut être ajustée de façon très précise en faisant varier les dimensions et/ou la forme du bloc en matériau élastomère obturant la partie centrale du profilé de la traverse.

Ces essais ont également mis en évidence que le collage du bloc en matériau élastomère sur la traverse donne de meilleurs résultats en termes de rigidité et de contrainte que la solution vissée.

De plus, des trois formes de blocs, la forme en U donne de meilleurs résultats. Cette forme est par ailleurs bien adaptée au collage du bloc en matériau élastomère sur la traverse.

La traverse selon l'invention présente également l'avantage d'être modulaire car sa largeur peut être adaptée à la largeur de la voie du véhicule.

Pour mettre en évidence les avantages de la traverse selon l'invention par rapport à une traverse selon l'état de la technique et décrite dans le FR-A-2 745 240, la Demanderesse a effectué des essais avec une traverse selon cet état de la technique.

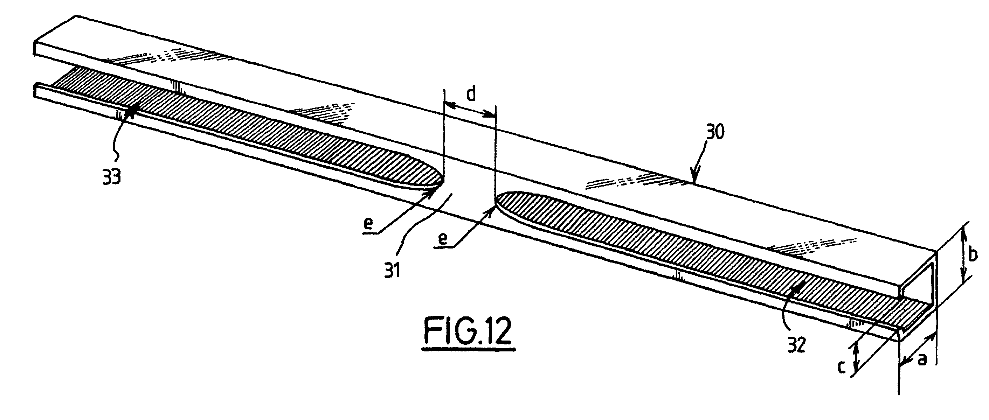

A cet effet, la traverse représentée à la Fig. 12 et désignée dans son ensemble par la référence 30 comporte une zone centrale 31 dans laquelle la section transversale de cette traverse présente une profil fermé et deux zones latérales, respectivement 32 et 33 dans lesquelles la section transversale de cette traverse présente un profil ouvert.

Les parois de cette traverse ont une épaisseur de 3mm et les dimensions de la traverse sont les suivantes :
a: 60 mm
b: 60 mm
c: 30 mm
d: 60 mm
e: diamètre 30 mm.

Les dimensions a, b et c de la traverse 30 sont identiques aux dimensions de la traverse 10 selon l'invention et les caractéristiques mécaniques de l'acier sont également identiques.

Les résultats obtenus sont les suivants :
- dérapage roue : 86,2 mm
- contrainte maximale ponctuelle : 1280 MPa
- contrainte maximale élargie : 1280 MPa

Ces résultats montrent que les contraintes engendrées avec une traverse semi-fermée sont plus importantes que celles obtenues dans une traverse selon la présente demande. Les contraintes sont situées au niveau des arrondis entre les zones ouvertes et la zone centrale fermée ce qui n'est pas le cas avec une traverse selon l'invention.

## Revendications

1. Traverse d'un train arrière de véhicule automobile, notamment d'un train arrière à bras tirés à traverse déformable, formée par un profilé métallique (11) comportant une ouverture longitudinale (12) continue s'étendant sur au moins 80% de la longueur dudit profilé (11), **caractérisée en ce que** ladite traverse est munie d'un bloc (20) en matériau élastomère formé par une plaque (21, 22) fixée audit profilé (11), présentant une section transversale en forme de quadrilatère et obturant la partie centrale de ladite ouverture longitudinale (12):

2. Traverse selon la revendication 1, **caractérisée en ce que** le profilé (11) comporte plusieurs faces et la face comportant l'ouverture longitudinale (12) est munie de deux bords tombés (13a, 13b) opposés sur lesquels est en appui ledit bloc (20) en matériau élastomère.

3. Traverse selon la revendication 1 ou 2, **caractérisée en ce que** le bloc (20) comporte des bords latéraux verticaux.

4. Traverse selon la revendication 1 ou 2, **caractérisée en ce que** le bloc (20) comporte des bords latéraux parallèles et inclinés.

5. Traverse selon l'une quelconque des revendications précédentes, **caractérisée en ce que** le bloc (20) est fixé sur le profilé (11) par collage.

6. Traverse selon l'une quelconque des revendications 1 à 4, **caractérisée en ce que** le bloc (20) est fixé sur le profilé (11) par des organes de vissage.

7. Traverse selon l'une quelconque des revendications précédentes, **caractérisée en ce que** le matériau élastomère du bloc (20) présente un module d'Young compris entre 200 et 500 MPa.

## Claims

1. Cross-member of a rear wheel-axle unit of an automobile vehicle, particularly of a rear wheel-axle unit with trailing arms with a deformable cross-member, the said cross-member being formed by a metal section (11) having a continuous longitudinal opening (12) extending over at least 80% of the length of the said section (11), **characterised in that** the said cross-member is equipped with a block (20) of elastomer material constituted by a plate (21, 22) which is fixed to the said section (11), has a cross-section in the shape of a quadrilateral and stops up the central part of the said longitudinal opening (12).

2. Cross-member according to claim 1, **characterised in that** the section (11) has a plurality of faces and the face having the longitudinal opening (12) is equipped with two opposed flanged edges (13a, 13b) on which the said block (20) of elastomer material is supported.

3. Cross-member according to claim 1 or 2, **characterised in that** the block (20) has vertical lateral edges.

4. Cross-member according to claim 1 or 2, **characterised in that** the block (20) has parallel and inclined lateral edges.

5. Cross-member according to any of the preceding claims, **characterised in** chat the block (20) is fixed onto the section (11) by sticking.

6. Cross-member according to any of claims 1 to 4, **characterised in that** the block (20) is fixed onto the section (11) by screwing components.

7. Cross-member according to any of the preceding claims, **characterised in that** the elastomer material of the block (20) has a Young's modulus of between 200 and 500 MPa.

## Patentansprüche

1. Querträger für eine Kraftfahrzeughinterachse, insbesondere einer Hinterachse mit gezogenen Armen mit einem biegsamen Querträger, welcher aus einem Metallprofil (11) besteht, das eine längsförmige ununterbrochene Öffnung (12) umfasst, die sich über mindestens 80 % der Länge des besagten Profils (11) erstreckt, **dadurch gekennzeichnet, dass** der besagte Querträger mit einem Block (20) aus einem Elastomermaterial bestückt ist, welcher aus einer Platte (21, 22) besteht, welche an dem Profil befestigt ist (11), und welche einen senkrecht stehenden Bereich in Form eines Vierecks darstellt und den mittleren Teil der besagten Öffnung (12) ausfüllt.

2. Querträger nach Anspruch 1, **dadurch gekennzeichnet, dass** das Profil (11) mehrere Flächen umfasst und die Fläche, welche die längsförmige Öffnung (12) beinhaltet, mit zwei heruntergezogenen gegenüberliegenden Rändern (13 a, 13 b) versehen ist, auf welchen der besagte Block (20) aus Elastomermaterial abgestützt wird.

3. Querträger nach Anspruch 1 oder 2, **dadurch gekennzeichnet, dass** der Block (20) seitliche senkrechte Ränder umfasst.

4. Querträger nach Anspruch 1 oder 2, **dadurch gekennzeichnet, dass** der Block (20) seitliche parallele, schräge Ränder umfasst.

5. Querträger nach einem der vorangehenden Ansprüche, **dadurch gekennzeichnet, dass** der Block (20) auf dem Profil (11) festgeklebt ist.

6. Querträger nach einem der Ansprüche 1 bis 4, **dadurch gekennzeichnet, dass** der Block (20) auf dem Profil (11) mit Schraubvorrichtungen befestigt ist.

7. Querträger nach einem der vorangehenden Ansprüche, **dadurch gekennzeichnet, dass** das Elastomermaterial des Blocks (20) einen Elastizitätsmodul, zwischen 200 und 500 MPa hat.
